# EUROPEAN PATENT APPLICATION

(11) **EP 1 231 424 A1**
(43) Date of publication of application: **14.08.2002**
(21) Application number: 02003064.9
(22) Date of filing: 12.02.2002
(51) Int. Cl.: F16L 11/15

(54) **"Pipe comprising a flexible portion in the form of a bellows sleeve"**

(30) Priority: 13.02.2001 IT TO010124
(71) Applicant: OFFICINE METALLURGICHE G. CORNAGLIA S.p.A., 10092 Beinasco (IT)
(72) Inventor: Cornaglia, Umberto, 10027 Testona (IT); Marcon, Ermes, 10024 Moncalieri (IT)
(74) Representative: Plebani, Rinaldo

(57) **Abstract**

A pipe (1) for pressurized fluid, in particular an automotive intercooler pipe, having at least one flexible portion (2) in the form of a bellows sleeve (3) formed in one piece with and of the same material as the rest of the pipe; a number of radial undulations (4) of the sleeve project with respect to an outer lateral surface (5) of the pipe, and are so shaped as to always project with respect to the outer lateral surface of the pipe at any angular portion of the flexible portion; and the flexible portion also includes two or more longitudinal ribs (6) so formed as to also project with respect to the outer lateral surface (5) of the pipe, and to intersect the undulations (4).

## Description

The present invention relates to a pipe for pressurized fluid, comprising at least one flexible portion in the form of a bellows sleeve formed in one piece with the rest of the pipe. The invention may be used to particular advantage, though not exclusively, in pressurized air circuits, particularly as part of the air intake system of a turbosupercharged internal combustion engine with an intercooler.

Bellows sleeves have long been used on pipes in general and on engine intake pipes (or exhaust pipes, in the case of metal piping), and provide, on the one hand, for forming complex pipelines in confined spaces, and compensating for assembly tolerances of the connected parts and any movement "induced" by in-service stress, and, on the other, for reducing the transmission of vibration between the connected parts, thus reducing noise. In the case of synthetic plastic pipes, such as those typically used in automotive air intake systems, modern (blow) molding methods enable bellows sleeves to be formed in one piece with straight portions of the pipe, thus simplifying assembly and reducing manufacturing cost.

In the case of air intake pipes made of synthetic plastic material, however, the bellows sleeve portions of the pipe undergo severe in-service strain, mainly due to the pressure of the fluid flowing along the pipe. In use, turbosupercharger-intercooler connecting pipes, in particular, undergo repeated fluctuations in pressure, normally accompanied by severe thermal stress and which result in fatigue of the bellows material and, consequently, in possible failure or, at any rate, reduced working life of the pipe.

The above problems are further compounded by internal and external stress resulting in axial stretch of the bellows.

To eliminate the above drawbacks, bellows sleeves are not normally used on internal combustion engine air intake pipes to connect straight pipe portions made of rigid material resistant to internal pressure. Instead, sleeves made of special rubber are employed, but which must be either applied and clamped - a complex, expensive, unreliable solution - or co-molded using a very expensive manufacturing technique.

It is an object of the present invention to provide a pipe comprising a bellows sleeve formed in one piece with and of the same material as the rest of the pipe, so as to solve the production and assembly problems referred to above, but which at the same time has none of the aforementioned drawbacks typically associated with molded synthetic plastic bellows sleeves : in particular, a pipe which is relatively cheap, reliable, easy to produce, and compact.

According to the present invention, there is provided a pipe for pressurized fluid, comprising at least one flexible portion in the form of a bellows sleeve formed in one piece with and of the same material as the rest of the pipe; said bellows sleeve comprising a number of radial undulations projecting with respect to an outer lateral surface of said pipe; characterized in that said undulations are so shaped as to always project with respect to said outer lateral surface of the pipe at any angular portion of said flexible portion; and in that, in combination, said flexible portion comprises at least two longitudinal ribs so formed as to project with respect to said outer lateral surface of the pipe, and to intersect said undulations at respective intersections.

In the pipe according to the present invention, respective ends of said ribs extend beyond the length of the flexible portion, and taper gradually towards, and until they are eventually flush with, said outer lateral surface.

The resulting pipe therefore comprises at least one flexible portion in the form of a bellows sleeve enabling the pipe to be made cheaply and easily in one piece, to be bent easily for use in confined spaces, and/or to assume complex shapes to adapt to the assembly tolerances of the parts for connection. At the same time, the design of the bellows sleeve according to the invention prevents both radial deformation and excessive axial stretch typical of pipes with known bellows portions, thus enabling the pipe to be made entirely of the same material.

A number of non-limiting embodiments of the present invention will be described by way of example with reference to the accompanying drawings, in which:
Figure 1 shows a side view of a detail of a first embodiment of the pipe according to the present invention;
Figure 2 shows a section along line II-II in Figure 1;
Figure 3 shows a section, with parts removed for clarity, along line III-III in Figure 2;
Figure 4 shows a side view of a detail of a second embodiment of the pipe according to the present invention;
Figure 5 shows a section along line V-V in Figure 4;
Figure 6 shows a side view of a detail of a third embodiment of the pipe according to the present invention;
Figure 7 shows a section along line VII-VII in Figure 6;
Figure 8 shows a side view of a detail of a fourth embodiment of the pipe according to the present invention;
Figure 9 shows a section along line IX-IX in Figure 8.

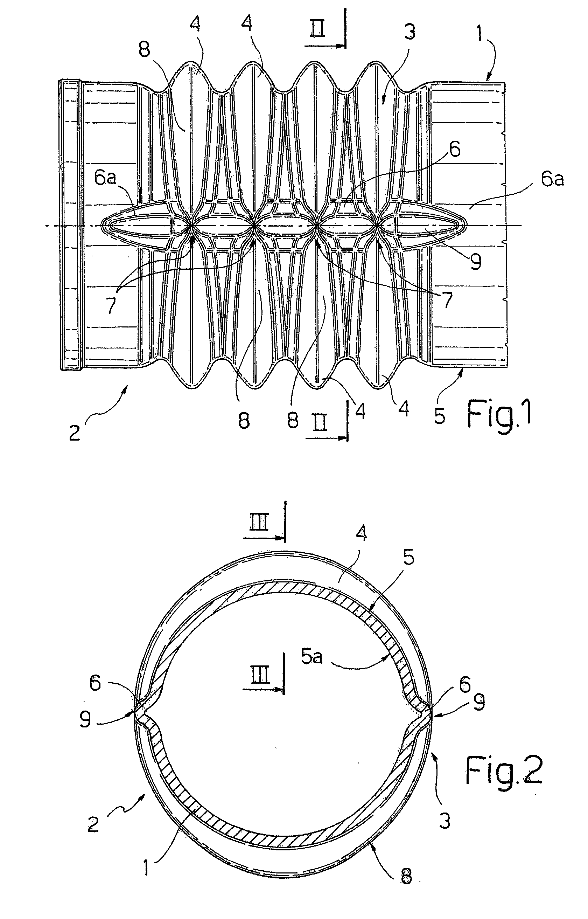

Figures 1 and 2 show part of a pressurized-fluid pipe 1 comprising a flexible portion 2 in the form of a bellows sleeve 3 formed in one piece with and of the same material as the rest of pipe 1. Sleeve 3 comprises a number of radial undulations 4 which, in a transverse, radial cross section of pipe 1 (Figure 2), are elliptic, and which always project with respect to an outer lateral surface 5 of pipe 1, i.e. at any angular portion of sleeve 3. In the example shown, undulations 4 project with respect to the substantially cylindrical lateral surface 5, both at the major axis of the elliptic section of each undulation 4, coincident with section line III-III, and at the minor axis of the same elliptic section, perpendicular to the major axis.

According to the invention, sleeve 3 also comprises two longitudinal ribs 6 formed in diametrically opposite positions, i.e. spaced 180° apart, and so formed as to also always project with respect to outer lateral surface 5, and to intersect undulations 4 at respective intersections 7.

More specifically, respective opposite ends 6a of ribs 6 extend, on pipe 1, beyond the length of flexible portion 2, and taper gradually in height towards, and until they are eventually flush with, outer lateral surface 5 of pipe 1. Ends 6a are preferably lance-shaped, by also tapering crosswise to pipe 1, and blend with surface 5 by means of convex boundary surfaces.

As shown clearly in Figure 2, at intersections 7, respective radially outer crests 8 of undulations 4 and corresponding crests 9 of ribs 6 are flush with one another.

Ribs 6 therefore provide for axially reinforcing flexible portions 2, with substantially no alteration in the flexibility of portions 2, except in the plane through ribs 6, and, above all, without producing any anomalous concentration of stress. To reduce the (very small) reduction in flexibility in the diametrical plane through ribs 6, ribs 6 are preferably formed at the minor axis of the elliptic section of undulations 4.

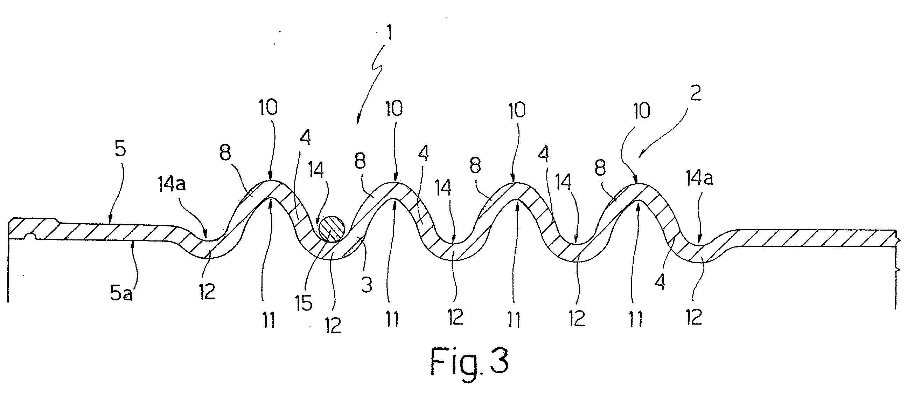

According to a further characteristic of the invention shown clearly in Figure 3, in radial section and along a longitudinal diametrical plane of pipe 1 coincident with the Figure 3 plane, undulations 4 are substantially cusp-shaped, at least at respective crests 8, which are defined, in radial section, by semicircular extrados portions 10, and by pointed-arch-shaped intrados portions 11. Tests have shown, and subsequent finite elements mathematical analysis confirmed, that, with the above radial section, undulations 4 provide for better withstanding severe in-service stress.

According to the invention, the radial section of bellows sleeve 3 is completed by undulations 4 (Figure 3) being connected to one another and to the rest of pipe 1 by respective annular wall portions 12 having a circular radial section and respective concavities 14 facing radially outwards of pipe 1. Wall portions 12 extend radially beyond lateral surface 5 and towards the axis of and inside pipe 1, i.e. beyond a substantially cylindrical inner lateral surface 5a of pipe 1.

In a variation not shown for the sake of simplicity, flexible portion 2 comprises more than two ribs 6, e.g. three or four, which are also equally spaced, e.g. 120° or 90° apart respectively, as opposed to 180°.

Figure 3 also shows a further variation of pipe 1 according to the invention, and which provides for partial radial reinforcement of bellows sleeve 3, without altering its flexibility or producing any stress concentration in use.

That is, pipe 1 comprises at least one known, preferably circular-section retaining ring 15 inserted inside a concavity 14 between two adjacent undulations 4, or a number of retaining rings 15 inserted inside respective concavities 14 between adjacent undulations 4. According to the invention, therefore, it is understood that respective concavities 14a connecting flexible portion 2 to the rest of pipe 1 should have no retaining rings 15. The "binding" effect of retaining ring/s 15, in fact, has surprisingly been found to be much less effective when applied to concavities 14a.

As stated, Figures 1, 2 and 3 show, for the sake of simplicity, only a limited portion of pipe 1, which, according to the invention, may comprise as many flexible portions 2 as required to form a pipe 1 of any complex shape. In which case, ribs 6 of each flexible portion 2 are offset angularly with respect to ribs 6 of the other flexible portions 2.

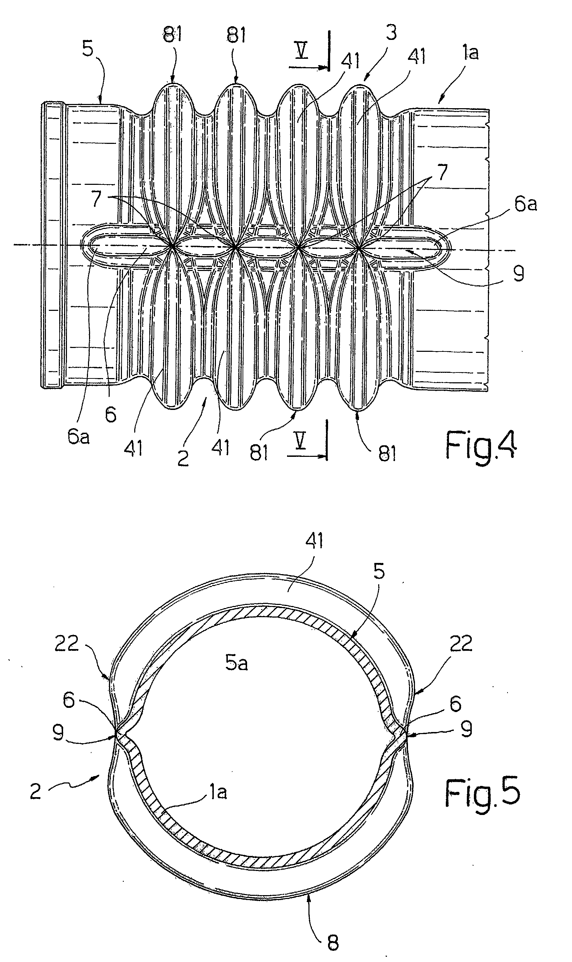

Figures 4 and 5 show a second embodiment 1a of pipe 1 described above, any details of which similar to or identical with those already described are indicated using the same reference numbers.

Pipe 1a differs from pipe 1 by bellows sleeve 3 comprising undulations 41 with a substantially circular radial section, as opposed to the elliptic section of undulations 4. Moreover, undulations 41 taper gradually in height close to and towards intersections 7, by each undulation 41 having two opposite saddle-shaped dips 22 having a circular radial section with a wide radius of curvature (i.e. much wider than that of the section of undulations 41). The dips 22 of different undulations 41 are all aligned longitudinally at ribs 6 and flush with crests 9 of ribs 6; and the variation is completed by undulations 41 having respective flat crests 81.

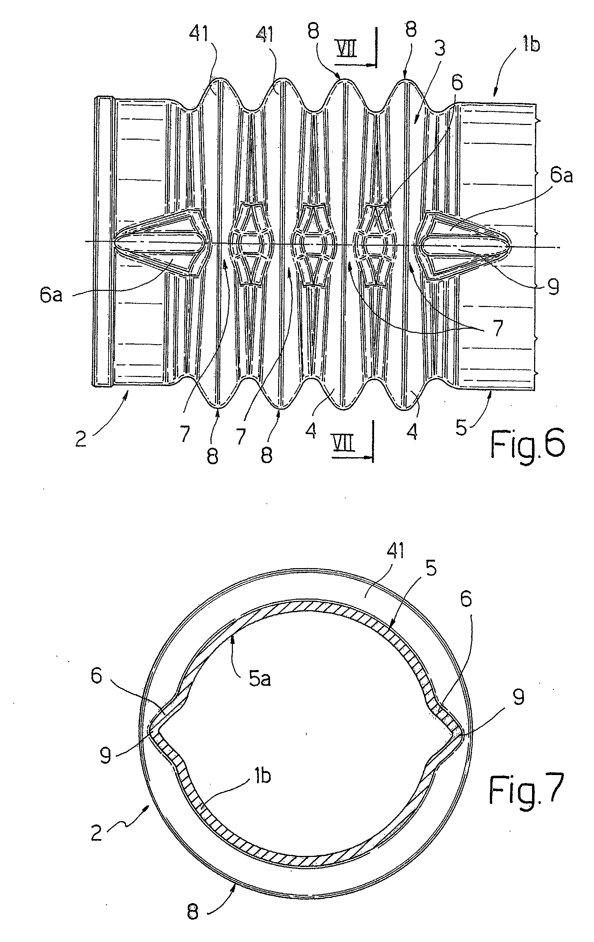

Figures 6 and 7 show a third embodiment 1b of the pipe according to the present invention, and which differs from pipe 1 by comprising circular undulations 41 (like pipe 1a) extending beyond the height of ribs 6 at intersections 7 (Figure 7). That is, in this case, the crests 9 of ribs 6 are always lower than crests 8 of undulations 41, 'with reference to the "base" surface defined by outer lateral surface 5 of pipe 1b.

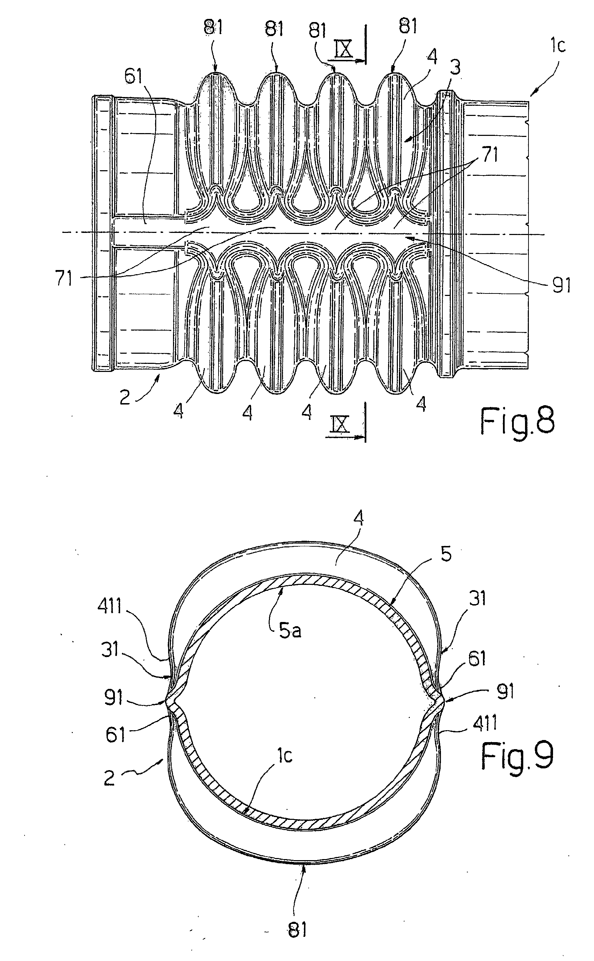

Figures 8 and 9 show a fourth embodiment 1c of the pipe according to the invention, and which comprises, in radial section, elliptic undulations 4 with flat crests 81. Moreover, it differs from pipe 1 by comprising intersections 71 with respective cross-shaped flat portions 31, wherein the branches of the cross are defined longitudinally by respective ribs 61 with flat crests 91, and transversely by shallow portions 411 of undulations 4, having a flat straight radial section. Close to intersections 71, undulations 4 not only have shallow portions 411, but also taper gradually in width towards intersections 71. Preferably, ribs 61 have no lance-shaped ends 61, as in pipe 1.

As will be clear from the foregoing description, further variations of the pipes described can be made, depending on working requirements, by simply providing, for example, for different combinations of undulations 4 or 41 - with or without flat crests 81 and/or flat crests 91 or dips 22 - and two or more ribs 6 or 61 of various heights.

## Claims

1. A pipe for pressurized fluid, comprising at least one flexible portion in the form of a bellows sleeve formed in one piece with and of the same material as the rest of the pipe; said bellows sleeve comprising a number of radial undulations projecting with respect to an outer lateral surface of said pipe; **characterized in that** said undulations are so shaped as to always project with respect to said outer lateral surface of the pipe at any angular portion of said flexible portion; and **in that**, in combination, said bellows sleeve comprises at least two longitudinal ribs so formed as to project with respect to said outer lateral surface of the pipe, and to intersect said undulations at respective intersections.

2. A pipe as claimed in Claim 1, **characterized in that** respective ends of said ribs extend beyond the length of said flexible portion, and taper gradually towards, and until they are eventually flush with, said outer lateral surface.

3. A pipe as claimed in Claim 1 or 2, **characterized in that** respective crests of said undulations and of said ribs are flush at said intersections.

4. A pipe as claimed in Claim 3, **characterized in that**, in a cross section of said pipe, said undulations are substantially elliptic.

5. A pipe as claimed in Claim 4, **characterized in that** said intersections have respective cross-shaped flat portions.

6. A pipe as claimed in any one of the foregoing Claims, **characterized in that**, close to said intersections, said undulations taper gradually in height and/or width towards the intersections.

7. A pipe as claimed in Claim 1 or 2, **characterized in that**, at said intersections, said undulations extend beyond the height of said ribs.

8. A pipe as claimed in Claim 7, **characterized in that**, in a cross section of said pipe, said undulations are substantially circular.

9. A pipe as claimed in any one of the foregoing Claims, **characterized in that** said flexible portions comprise more than two said ribs.

10. A pipe as claimed in Claim 9, **characterized in that** said ribs are equally spaced angularly.

11. A pipe as claimed in any one of the foregoing Claims, **characterized in that**, in radial section and in a longitudinal diametrical plane of said pipe, said undulations are substantially cusp-shaped, at least at respective crests of the undulations.

12. A pipe as claimed in Claim 11, **characterized in that**, in radial section, said crests of said undulations have respective semicircular outer (extrados) profiles, and respective pointed-arch-shaped inner (intrados) profiles.

13. A pipe as claimed in any one of the foregoing Claims, **characterized by** comprising at least two said flexible portions.

14. A pipe as claimed in Claim 13, **characterized in that** said ribs of each said flexible portion are offset angularly with respect to the ribs of each other said flexible portion.

15. A pipe as claimed in any one of the foregoing Claims, **characterized by** comprising a retaining ring inserted in at least one concavity between two adjacent said undulations.
